# EUROPÄISCHE PATENTSCHRIFT

(11) **EP 0 937 526 B1**
(45) Veröffentlichungstag und Bekanntmachung des Hinweises auf die Patenterteilung: **13.06.2001**
(21) Anmeldenummer: 98124717.4
(22) Anmeldetag: 28.12.1998
(51) Int. Cl.: B23B 27/04

(54) **Halter für spanabhebende Werkzeug-Einsätze**
Holder for chip cutting tool inserts
Porte-outils pour plaquette de coupe à enlèvement de copeaux

(30) Priorität: 21.02.1998 DE 19807498
(43) Veröffentlichungstag der Anmeldung: 25.08.1999
(73) Patentinhaber: HARTMETALL-WERKZEUGFABRIK PAUL HORN GMBH, D-72072 Tübingen (DE)
(72) Erfinder: Schäfer, Hans, 72819 Gomaringen (DE); Oettle, Matthias, 72585 Riederich (DE)
(74) Vertreter: Patentanwälte Bartels und Partner

(56) Entgegenhaltungen:
- EP-A- 0 095 062
- CH-A- 685 680
- DE-A- 3 301 919
- DE-U- 8 804 365
- DE-U- 8 915 043
- FR-A- 2 373 349
- DATABASE WPI Section PQ, Week 87359. September 1987 Derwent Publications Ltd., London, GB; Class P54, AN 87-249039 XP002095637 & SU 1 284 716 A (GORKI CAR WKS) , 23. Januar 1987

## Beschreibung

Die Erfindung bezieht sich auf einen Halter für spanabhebende Werkzeug-Einsätze, insbesondere Stech- oder Schneideinsätze, mit einem näherungsweise balkenförmigen Schneidenträger, einer in diesem endseitig ausgebildeten Ausnehmung, die als Aufnahmetasche für die Einsätze dient und durch, die lichte Weite der Aufnahmetasche definierende Klemmbacken begrenzt ist, einem sich vom Seitenrand des Schneidenträgers bis nahe an den inneren Abschluß der Aufnahmetasche erstreckenden Schlitz zum Ermöglichen einer elastischen Schwenkbeweglichkeit einer der Klemmbacken und mit einer Klemmeinrichtung, die zum Erzeugen einer im Bereich des Schlitzes auf die schwenkbewegliche Klemmbacke einwirkenden Klemmkraft ein drehbar gelagertes Betätigungsglied aufweist.

Halter dieser Art sind bereits bekannt, vergleiche EP 0 259 847 A1, die einen Halter offenbart, bei dem der im Schneidenträger vorgesehene Schlitz durch eine Bohrung unterbrochen ist, in die ein Keilelement ragt, das zum Erzeugen der auf die schwenkbewegliche Klemmbacke einwirkenden Klemmkraft mittels einer Spannschraube verstellbar ist. Hierbei besteht die Gefahr, daß bei einem zu starken oder unsachgemäßen Anziehen der sich durch den Schlitz hindurch erstreckenden Spannschraube zusätzlich zur gewünschten Klemmkraft, die die Schwenkbewegung der Klemmbacke in der Hauptebene des Schneidenträgers bewirkt, eine Querkraftkomponente erzeugt wird, die an der beweglichen Klemmbacke als störende Biegekraft angreift.

Der Erfindung liegt die Aufgabe zugrunde, einen Halter der fraglichen Art zu schaffen, bei dem auch bei hoher, durch die Klemmeinrichtung erzeugter Klemmkraft keine Gefahr besteht, daß störende Querkraftkomponenten an der beweglichen Klemmbacke angreifen.

Bei einem Halter der eingangs genannten Art ist diese Aufgabe erfindungsgemäß dadurch gelöst, daß die das Betätigungsglied aufnehmende Bohrung in einem Abstand vom Schlitz angeordnet ist und daß ein die Klemmkraft vom Betätigungsglied auf die bewegliche Klemmbacke übertragendes Kraftübertragungsglied im Schneidenträger verschiebbar geführt ist.

Durch die räumliche Trennung des Betätigungsgliedes vom Schlitz und dadurch, daß die Klemmkraft über ein im Schneidenträger geführtes Bauelement auf die Klemmbacke übertragen wird, die Kraftübertragung also längs definierter Wirkungslinie erfolgt, sind störende Querkräfte vollständig vermieden. Somit kann mit verhältnismäßig hohen Klemmkräften problemlos und sicher gearbeitet werden.

Bei fertigungstechnisch günstigen Ausführungsbeispielen ist das Kraftübertragungsglied im Schneidenträger in einer zweiten Bohrung geführt, deren Achse zur Achse der ersten Bohrung unter einem Winkel verläuft und diese in einem Abstand vom Schlitz schneidet.

Das Betätigungsglied der Klemmeinrichtung kann in Form eines Exzenters vorgesehen sein, wobei als Kraftübertragungsglied ein sich einerseits am Radius des Exzenters und andererseits an der beweglichen Klemmbacke abstützender Stift vorgesehen sein kann. Anstelle des Exzenters kann auch ein drehbarer Nocken mit einer Nockenfläche geringer Steigung vorgesehen sein, beispielsweise in Form einer Schnecke mit linearer Steigung.

Alternativ kann die erste Bohrung mit einem Innengewinde für eine als Betätigungsglied der Klemmeinrichtung dienende Klemmschraube versehen sein, die an ihrem in die zweite Bohrung ragenden Endbereich einen Konus bildet, der in Zusammenwirkung mit dem in der zweiten Bohrung geführten Kraftübertragungsglied eine dieses längs der zweiten Bohrung verschiebende Kraftkomponente erzeugt.

Hierbei kann als Kraftübertragungsglied eine sich einerseits am Konus der Klemmschraube und andererseits an der beweglichen Klemmbacke abstützende Kugel vorgesehen sein. Ebenso könnte ein sich am Konus abstützender Stift anstatt einer Kugel Verwendung finden.

Nachstehend ist die Erfindung anhand von in der Zeichnung dargestellten Ausführungsbeispielen im einzelnen erläutert.

Es zeigen:
- Fig. 1: eine abgebrochen und gegenüber der in Frage kommenden praktischen Verwirklichung etwa im Maßstab 4 : 1 vergrößerte Seitenansicht eines Ausführungsbeispiels des erfindungsgemäßen Halters;
- Fig. 2: eine perspektivische Teilansicht des Ausführungsbeispiels von Fig. 1, wobei jedoch lediglich der Schneidenträger ohne Klemmeinrichtung gezeigt ist;
- Fig. 3: eine perspektivische Ansicht der Einzelteile der Klemmeinrichtung des Ausführungsbeispiels von Fig. 1 und 2;
- Fig. 4: eine abgebrochen und im gleichen Maßstab wie Fig. 1 bis 3 vergrößert gezeichnete Teilseitenansicht eines zweiten Ausführungsbeispiels des Halters;
- Fig. 5: eine perspektivisch gezeichnete Teilseitenansicht des zweiten Ausführungsbeispieles des Halters;
- Fig. 6: eine perspektivische Ansicht eines eine Nockenfläche aufweisenden Drehzapfens der Klemmeinrichtung eines dritten Ausführungsbeispieles;
- Fig. 7: eine Seitenansicht des Drehzapfens von Fig. 6 und
- Fig. 8: einen gegenüber Fig. 7 in größerem Maßstab gezeichneten Querschnitt entsprechend der Schnittliene VIII - VIII von Fig. 7.

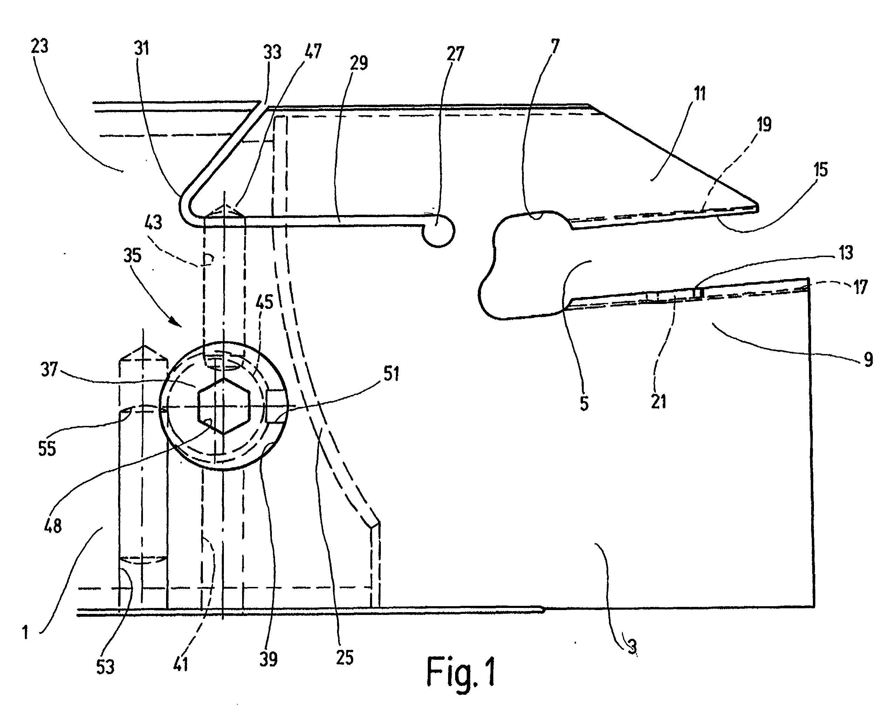

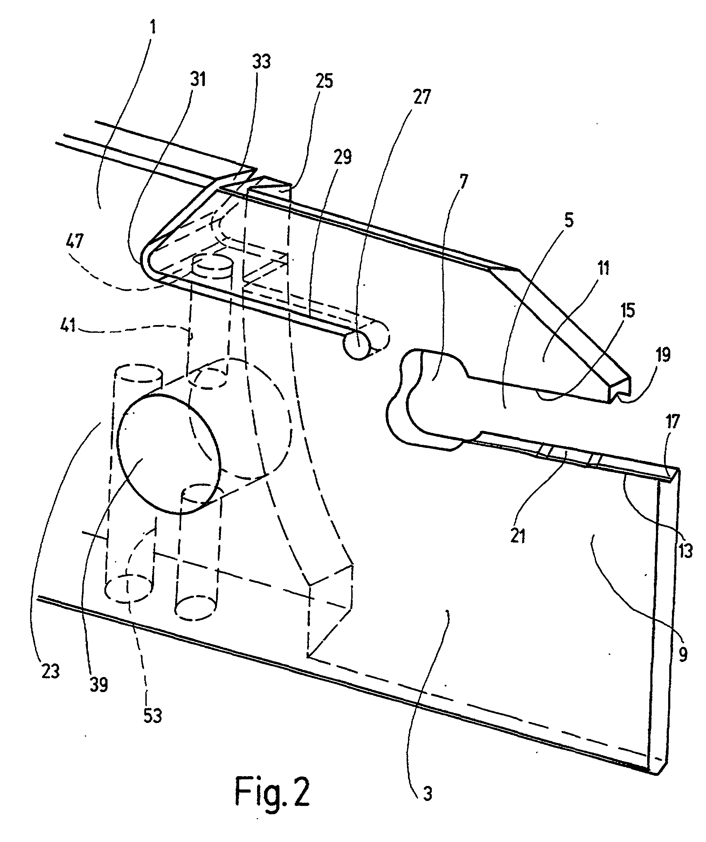

Zur Erläuterung eines ersten Ausführungsbeispieles des Halters für Werkzeug-Einsätze wird zunächst auf Fig. 1 bis 3 Bezug genommen, von denen die Fig. 1 und 2 den vorderen Teil eines Schneidenträgers 1 zeigen, und zwar jeweils ohne einen aufzunehmenden, daran festzuklemmenden Werkzeug-Einsatz. In der bei derartigen Haltern üblichen Art weist der Schneidenträger 1 in seinem vorderen Endbereich 3 eine Aufnahmetasche 5 in Form eines zur Stirnseite hin offenen Durchbruches auf. Der Durchbruch weist an seinem inneren Ende eine Erweiterung 7 auf. In dem sich an die Erweiterung 7 anschließenden, nach vorne verlaufenden Bereich ist die lichte Weite der Aufnahmetasche 5 durch zwei Klemmbacken 9 und 11 begrenzt, die einander zugekehrte Klemmflächen 13 und 15 bilden, zwischen denen ein betreffender, nicht gezeigter Werkzeug-Einsatz festklemmbar ist. Wie insbesondere aus Fig. 2 zu ersehen ist, weisen die Klemmflächen 13, 15 jeweils eine V-förmige Längsnut 17 bzw. 19 auf, wobei in letzterer eine örtliche Vertiefung 21 eingearbeitet ist. Diese Formgebung der Klemmflächen 13, 15 dient zur genauen Positionierung des mit hierzu komplementärer Konturierung versehenen Werkzeug-Einsatzes.

Zur Anpassung an die verhältnismäßig geringe Breite von in der Aufnahmetasche 5 aufzunehmenden Stecheinsätzen weist der Schneidenträger in seinem vorderen Endbereich 3 eine geringere Breite als in seinem rückwärtigen Balkenteil 23 auf, wobei der Übergang zwischen dem schmalen Endbereich 3 und dem Balkenteil 23 durch eine leicht gewölbte Schulterfläche 25 gebildet ist. Ausgehend von einer dem inneren Ende der Erweiterung 7 der Aufnahmetasche 5 benachbarten Öffnung 27 erstreckt sich ein im Schneidenträger 1 durchgehend ausgebildeter Schlitz 29 geradlinig bis in den Balkenteil 23 hinein im wesentlichen parallel zum oberen Seitenrand desselben bis zu einer in Fig. 1 und 2 mit 31 bezeichneten Stelle, an der der geradlinige Abschnitt des Schlitzes 29 endigt und dieser einen Verlauf schräg nach oben und nach vorn annimmt und schließlich am oberen Rand des Balkenteiles 23 des Schneidenträgers 1 bei 33 endigt.

Aufgrund der Lageanordnung des Schlitzes 29 ergibt sich eine elastische Schwenkbeweglichkeit für die Klemmbacke 11, wobei das Drehzentrum im Bereich zwischen der Öffnung 27 und dem benachbarten Rand der Erweiterung 7 liegt. Somit bewirkt eine Erweiterung des Schlitzes 29 in seinem hinteren, der Stelle 31 benachbarten Bereich eine Annäherung der Klemmfläche 15 der Klemmbacke 11 an die gegenüberliegende Klemmfläche 13 der Klemmbacke 9 für das Festlegen des betreffenden, in der Aufnahmetasche 5 befindlichen Werkzeug-Einsatzes durch Festklemmen.

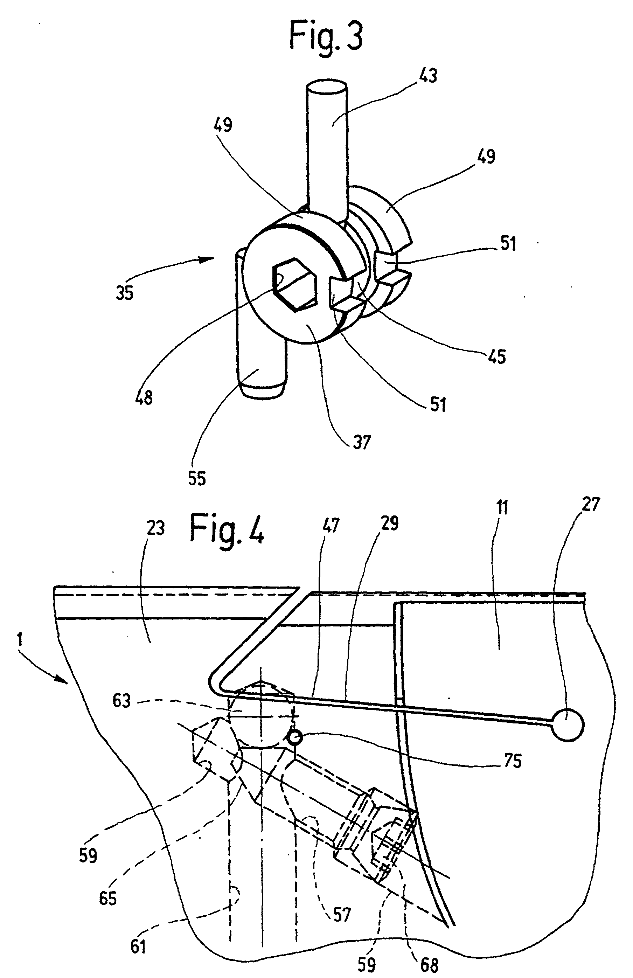

Einzelheiten einer Klemmeinrichtung 35 zur Erzeugung einer Klemmkraft, die den Schlitz 29 in seinem hinteren, der Stelle 31 benachbarten Bereich erweitert, um die Klemmbacke 11 zu schwenken, sind in Fig. 1 und 3 gezeigt. Als Betätigungsglied der Klemmeinrichtung 35 ist ein an einem Drehzapfen 37 ausgebildeter Exzenter 45 vorgesehen. Der Drehzapfen 37 ist in einer im Balkenteil 23 des Schneidenträgers 1 ausgebildeten Querbohrung 39 drehbar gelagert. Eine zweite Bohrung 41, die sich vom unteren Rand des Balkenteiles 23 durchgehend bis zum Schlitz 29 erstreckt, wo sie der Stelle 31 benachbart mündet, schneidet die Querbohrung 39 rechtwinklig in deren zentralem Bereich. Der Abschnitt der Bohrung 41 zwischen der Querbohrung 39 und dem Schlitz 29 bildet eine Führung, in der ein Kraftübertragungsstift 43 längsverschiebbar aufgenommen ist. Der Stift 43 stützt sich einerseits am Radius des Exzenters 45 (siehe insbesondere Fig. 3) und andererseits an dem der Stelle 31 benachbarten, den Schlitz 29 begrenzenden, hinteren Teil 47 der beweglichen Klemmbacke 11 ab.

Der Exzenter 45 ist durch eine Ringnut gebildet, die in den Umfang des kreiszylindrischen Drehzapfens 37, zu dessen Drehachse versetzt, als Vertiefung eingearbeitet ist. Für die Drehbetätigung des in der Querbohrung 39 drehbar gelagerten Drehzapfens 37 weist dieser einen Torx oder Innensechskant 48 auf. Vor dem Einsetzen des Drehzapfens 37 in die Querbohrung 39 ist der Kraftübertragungsstift 43 vom unteren, offenen Ende der Bohrung 41 her einführbar. Damit der Drehzapfen 37 sodann in die Querbohrung 39 einführbar ist, weist der Drehzapfen 37 in den Wandteilen 49, die die den Exzenter 45 bildende Ringnut seitlich begrenzen, Durchbrüche 51 auf, die bei geeigneter Drehstellung des Drehzapfens 37 dessen Einführung die Querbohrung 39 nach dem Einsetzen des Kraftübertragungsstiftes 43 ermöglichen.

Eine sich parallel zur Bohrung 41 erstreckende, weitere Bohrung 53 tangiert die Querbohrung 39 im mittleren Bereich, in dem sich bei eingesetztem Drehzapfen 37 die den Exzenter 45 bildende, vertiefte Ringnut befindet. Durch Einsetzen eines Sicherungsstiftes 55 in die Bohrung 53 ist somit der Drehzapfen 37, zwischen dessen äußere Wandteile 49 der Sicherungsstift 55 eingreift, gegen Axialverschieben in der Querbohrung 39 gesichert, siehe Fig. 1 und 3.

Durch Verdrehen des Drehzapfens 37 mittels eines mit dem Innensechskant 48 zusammenwirkenden Werkzeuges ist über den Kraftübertragungsstift 43, der sich am Radius des Exzenters 45 einerseits und an der beweglichen Klemmbacke 11 an deren hinterem Teil 47 abstützt, eine zwischen den Klemmflächen 13, 15 wirkende Klemmkraft erzeugbar. Durch die Führung des Kraftübertragungsstiftes 43 in der Bohrung 41 erfolgt die Übertragung der Klemmkraft querkraftfrei. Durch die geringe Nockensteigung des Exzenters 45 ist in Zusammenwirkung mit dem Kraftübertragungsstift 43 Selbsthemmung des in der Querbohrung 39 passend drehbar gelagerten Drehzapfens 37 gewährleistet, so daß die Klemmung des im Klemmspalt zwischen den Klemmbacken 9 und 11 gesicherten Werkzeug-Einsatzes nur durch zwangsmäßiges Rückdrehen des Drehzapfens 37 aufhebbar ist.

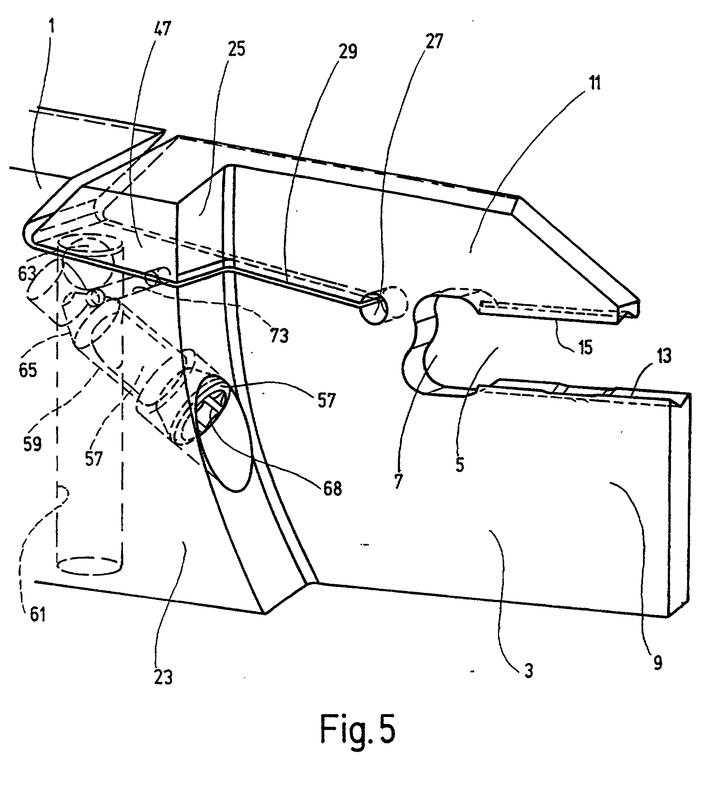

Fig. 4 und 5 zeigen ein zweites Ausführungsbeispiel, bei dem als drehbares Betätigungsglied der Klemmeinrichtung eine Klemmschraube 57 vorgesehen ist, die in einer mit Innengewinde versehenen Bohrung 59 sitzt. Die Bohrung 59 erstreckt sich unter einem Winkel zu einer als Führung für das Kraftübertragungsglied dienenden zweiten Bohrung 61, wobei sich die Bohrungen 59 und 61 in der Nähe des Schlitzes 29 schneiden. Die äußere Mündung der Bohrung 59 befindet sich an der Schulterfläche 25, die den Absatz zwischen dem schmalen vorderen Endbereich 3 und dem rückwärtigen Balkenteil 23 des Schneidenträgers 1 bildet. An dieser Mündungsöffnung ist ein Torx oder Innensechskant 68 der Klemmschraube 57 für deren Drehbetätigung zugänglich.

Am anderen Ende weist die Klemmschraube 57 einen Konus 65 auf, der in die zweite Bohrung 61 ragt. Eine als Kraftübertragungsglied vorgesehene Kugel'63 stützt sich einerseits am Konus 65 und andererseits an der Unterseite des rückwärtigen Teiles 47 der beweglichen Klemmbacke 11 ab. Um ein Herausfallen der Kugel 63 aus der Bohrung 61 bei herausgeschraubter Klemmschraube 57 zu verhindern, ist ein Sicherungsstift 75 in eine die Bohrung 61 tangierende, unterhalb der Kugel 63 querverlaufende Sicherungsbohrung 73 eingesetzt.

Die Wirkungsweise des zweiten Ausführungsbeispiels entspricht derjenigen des ersten Beispiels. Durch Einschrauben der Klemmschraube 57 erzeugt die Umfangsfläche des endseitigen Konus' 65 eine Klemmkraft in Zusammenwirkung mit der Kugel 63, die in der Bohrung 61 geführt ist, so daß auf den Teil 47 der beweglichen Klemmbacke 11 lediglich eine Kraftkomponente mit längs der Achse der Bohrung 61 verlaufender Wirkungslinie, also ohne jedwede Querkraftkomponente, aufgebracht wird. Wie ohne weiteres ersichtlich ist, ist die Klemmeinrichtung selbsthemmend, d.h. die Spannkraft, mit der ein betreffender Werkzeug-Einsatz (nicht dargestellt) in der Aufnahmetasche 5 festgeklemmt wird, ist lediglich durch Herausschrauben der Klemmschraube 57 aufhebbar.

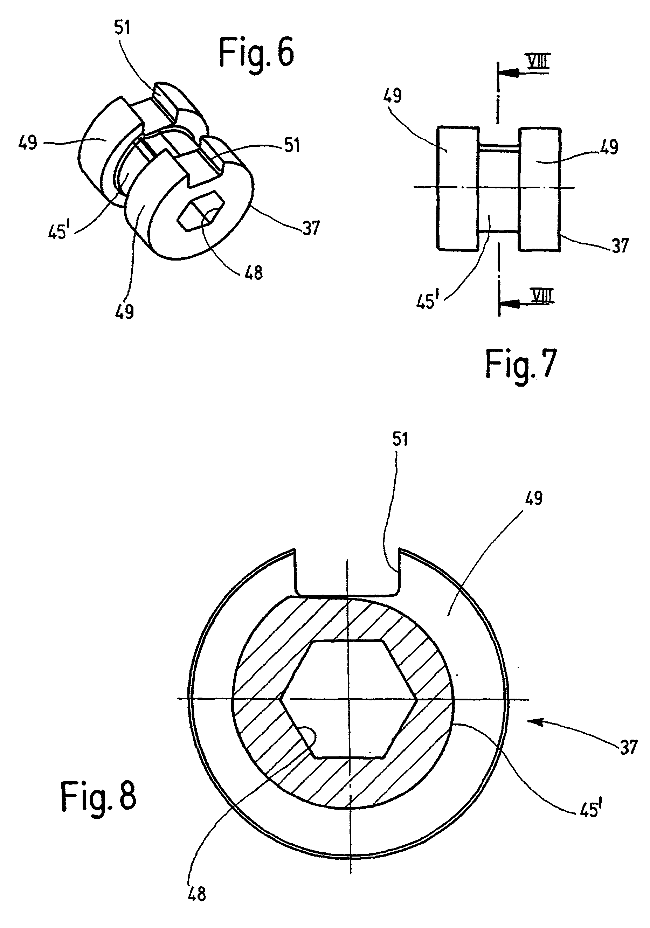

Fig. 6 bis 8 beziehen sich auf ein drittes Ausführungsbeispiel des erfindungsgemäßen Halters. Dieses Ausführungsbeispiel unterscheidet sich vom erstbeschriebenen Ausführungsbeispiel gemäß Fig. 1 bis 3 lediglich durch eine abgewandelte Ausführungsform des Betätigungsgliedes der Klemmeinrichtung. Wie beim erstbeschriebenen Ausführungsbeispiel weist das Betätigungsglied einen Drehzapfen 37 auf, der in der Querbohrung 39 des Schneidenträgers 1 drehbar gelagert ist. Im Unterschied zum ersten Ausführungsbeispiel bildet die zwischen den Wandteilen 49 als Vertiefung eingearbeitete Ringnut keinen kreisrunden, achsversetzten Exzenter, sondern einen Nocken 45'. Wie insbesondere aus Fig. 8 zu ersehen ist, weist der Nocken 45' eine umfängliche Nockenfläche geringer Steigung auf, die sich, ausgehend vom auf die Durchbrüche 51 ausgerichteten Bereich kleinsten Radius', als Schnecke mit linearer Steigung über einen Winkelbereich von 320° erstreckt.

## Patentansprüche

1. Halter für spanabhebende Werkzeug-Einsätze, insbesondere Stech- oder Schneideinsätze, mit einem näherungsweise balkenförmigen Schneidenträger (1, 23), einer in diesem endseitig ausgebildeten Ausnehmung, die als Aufnahmetasche (5) für die Einsätze dient und durch, die lichte Weite der Aufnahmetasche (5) definierende Klemmbacken (9, 11) begrenzt ist, einem sich vom Seitenrand des Schneidenträgers (1, 23) bis nahe an den inneren Abschluß (7) der Aufnahmetasche (5) erstreckenden Schlitz (29) zum Ermöglichen einer elastischen Schwenkbeweglichkeit einer (11) der Klemmbacken und mit einer Klemmeinrichtung, die zum Erzeugen einer im Bereich des Schlitzes (29) auf die schwenkbewegliche Klemmbacke (11) einwirkenden Klemmkraft ein in einer Bohrung (39, 59) im Schneidenträger (1, 23) drehbar gelagertes Betätigungsglied (37, 57) aufweist, dadurch gekennzeichnet, daß die das Betätigungsglied (37, 57) aufnehmende Bohrung (39, 59) in einem Abstand vom Schlitz (29) angeordnet ist und daß ein die Klemmkraft vom Betätigungsglied (37, 57) auf die bewegliche Klemmbacke (11) übertragendes Kraftübertragungsglied (43, 63) im Schneidenträger (1) verschiebbar geführt ist.

2. Halter nach Anspruch 1, dadurch gekennzeichnet, daß das Kraftübertragungsglied im Schneidenträger (1, 23) in einer zweiten Bohrung (41, 61) geführt ist, deren Achse zur Achse der ersten Bohrung (39, 59) unter einem Winkel verläuft und diese in einem Abstand vom Schlitz (29) schneidet.

3. Halter nach Anspruch 2, dadurch gekennzeichnet, daß als Betätigungsglied der Klemmeinrichtung ein Exzenter (45) vorgesehen ist und daß als Kraftübertragungsglied ein sich einerseits am Radius des Exzenters (45) und andererseits an der beweglichen Klemmbacke (11) abstützender Stift (43) vorgesehen ist.

4. Halter nach Anspruch 2, dadurch gekennzeichnet, daß als Betätigungsglied der Klemmeinrichtung ein drehbarer Nocken (45') mit einer Nockenfläche geringer Steigung, insbesondere in Form einer sich mit linearer Steigung über einen Winkelbereich von etwa 320° erstreckenden Schnekke, vorgesehen ist und daß als Kraftübertragungsglied ein sich einerseits am Nocken (45') und andererseits an der beweglichen Klemmbacke (11) abstützender Stift (43) vorgesehen ist.

5. Halter nach Anspruch 3 oder 4, dadurch gekennzeichnet, daß die zweite Bohrung (41, 61) von einem Seitenrand des balkenförmigen Schneidenträgers (1, 23) ausgehend zur Balkenlängsachse senkrecht bis zum Schlitz (29) verläuft und im Abstand von diesem von der ersten Bohrung unterbiochen ist, die als zu ihr senkrecht verlaufende durchgehende Querbohrung (39) ausgebildet ist, die die Drehlagerung des Exzenters (45) oder des Nockens (45') bildet.

6. Halter nach Anspruch 5, dadurch gekennzeichnet, daß der Exzenter oder der Nocken durch eine Ringnut (45, 45') gebildet ist, die in den Umfang eines in der Querbohrung (39) drehbar gelagerten kreiszylindrischen Drehzapfens (37) als Vertiefung eingearbeitet ist, und daß zumindest einer der die Ringnut (45, 45') seitlich begrenzenden Wandteile (49) des Drehzapfens (37) im Bereich der größten Tiefe der Ringnut (45, 45') einen Durchbruch (51) aufweist, der den Durchtritt des Kraftübertragungsstiftes (43) beim Einsetzen des Drehzapfens (37) in die Querbohrung (39) ermöglicht.

7. Halter nach Anspruch 6, gekennzeichnet durch eine im Schneidenträger (1, 23) parallel zur zweiten Bohrung (41) für den Kraftübertragungsstift (43) ausgebildete, weitere Bohrung (53), die die Querbohrung (39) für den Drehzapfen (37) im Bereich von dessen Ringnut (45, 45') tangiert und zur Aufnahme eines in die durch die Ringnut (45, 45') gebildete Vertiefung im Umfang des Drehzapfens (37) eingreifenden Sicherungsstiftes (55) vorgesehen ist.

8. Halter nach Anspruch 2, dadurch gekennzeichnet, daß die erste Bohrung (59) ein Innengewinde für eine als Betätigungsglied der Klemmeinrichtung dienende Klemmschraube (57) aufweist, die an ihrem in die zweite Bohrung (61) ragenden Endbereich einen Konus (65) bildet, der in Zusammenwirkung mit dem in der zweiten Bohrung (61) geführten Kraftübertragungsglied (63) eine dieses längs der zweiten Bohrung (61) verschiebende Kraftkomponente erzeugt.

9. Halter nach Anspruch 8, dadurch gekennzeichnet, daß als Kraftübertragungsglied eine sich einerseits am Konus (65) der Klemmschraube (57) und andererseits an der beweglichen Klemmbacke (11) abstützende Kugel (63) vorgesehen ist.

10. Halter nach Anspruch 8, dadurch gekennzeichnet, daß als Kraftübertragungsglied ein sich einerseits am Konus (65) der Klemmschraube (57) und andererseits an der beweglichen Klemmbacke (11) abstützender Stift vorgesehen ist.

11. Halter nach einem der Ansprüche 1 bis 10, dadurch gekennzeichnet, daß das drehbare Betätigungsglied der Klemmeinrichtung für seine Drehbetätigung mit einem Innensechskant (48, 68) oder Torx versehen ist.

12. Halter nach einem der Ansprüche 2 bis 11, dadurch gekennzeichnet, daß der die Aufnahmetasche (5) enthaltende vordere Endbereich (3) des Schneidenträgers in Anpassung an einen schmalen, aufzunehmenden Stecheinsatz eine geringere Breite aufweist als der übrige, rückwärtige, nicht verjüngte Bereich (23) des Schneidenträgers, daß der die elastische Schwenkbeweglichkeit der beweglichen Klemmbacke (11) ermöglichende Schlitz (29) sich vom verjüngten Bereich (3) bis in den nicht verjüngten Bereich (23) des Schneidenträgers erstreckt und daß die erste und die zweite Bohrung (39, 59 bzw. 41, 61) im nicht verjüngten Bereich (23) des Schneidenträgers vorgesehen sind.

13. Halter nach einem der Ansprüche 8 bis 12, dadurch gekennzeichnet, daß die erste Bohrung (59) an einer Schulterfläche (25) des Schneidenträgers mündet, die den Übergang zwischen dem verjüngten vorderen Endbereich (3) und dem nicht verjüngten rückwärtigen Bereich (23) des Schneidenträgers bildet.

## Claims

1. A holder for chip cutting tool inserts, particularly parting-off or cutting inserts with an approximately beam-shaped cutter carrier (1, 23), a recess formed in it at one end, which serves as a locating pocket (5) for the inserts and is bounded by the clamping jaws (9, 11) defining the clearance of the locating pocket (5), a slot (29) extending from the side edge of the cutter carrier (1, 23) up to near the inside end (7) of the holding pocket (5) to allow flexible swivelling movement of one (11) of the clamping jaws, and with a clamping device which has a rotatably located actuating element (37, 57) in a bore (39, 59) in the cutter carrier (1, 23) for producing in the area of the slot (29) a clamping force acting on the swivelling clamping jaw (11), characterised by the fact that the bore (39, 59) accepting the actuating element (37, 57) is arranged at a distance from the slot (29) and that the force transmitting element (43, 63) transmitting the clamping force from the actuating element (37, 57) to the moving clamping jaw (11) is slidable in the cutter carrier (1).

2. A holder according to Claim 1, characterised by the fact that the force transmitting element in the cutter carrier (1, 23) is aligned in a second bore (41, 61) the centreline of which is set at an angle to the centreline of the first bore (39, 59), and intersects it at a distance from the slot (29).

3. A holder according to Claim 2, characterised by the fact that an eccentric (45) is envisaged for actuating the clamping attachment and that a pin (43) supported at one end at the radius of the eccentric (45) and at the moving clamping jaw (11) at the other is envisaged as the force transmitting element.

4. A holder according to Claim 2, characterised by the fact that a rotatable cam (45') with a cam face having a low gradient, particularly in the form of a worm extending at a linear gradient through an angle of approx. 320° is envisaged and that a pin (43) supported at one end at a cam (45') and on a movable clamping jaw (11) at the other is envisaged as the force transmitting element.

5. A holder according to Claims 3 or 4, characterised by the fact that the second bore (41, 61) extends starting from one side edge of the beam-shaped cutter carrier (1, 23) perpendicular to the longitudinal axis of the beam up to the slot (29) and is interrupted at a distance from it by the first bore, which is formed as a through cross bore (39) extending perpendicular to it, which forms the pivot for the eccentric (45) or the cam (45').

6. A holder according to Claim 5, characterised by the fact that the eccentric of the cam is formed by an annular groove (45, 45') which is cut in the form of a depression into the periphery of a round cylindrical pivot (37) held rotatably in the cross bore (39) and that at least one of the wall parts (49) of the pivot (37) bounding the annular groove (45, 45') on the side has an opening (51) in the area of the greatest depth of the annular groove (45, 45') which allows the force transmitting pin (43) to pass when the pivot (37) is inserted into the cross bore (39).

7. A holder according to Claim 6, characterised by a further bore (53) formed in the cutter carrier (1, 23) parallel to the second bore (41) for the force transmitting pin (43), extending at a tangent to the cross bore (39) for the pivot (37) in the area of its annular groove (45, 45') and envisaged for holding a locking pin (55) engaging in the depression formed by the annular groove (45, 45') on the periphery of the pivot (37).

8. A holder according to Claim 2, characterised by the fact that the first bore (59) has an inside thread for a clamping bolt (57) serving as an actuating element for the clamping device, its end area extending into the second bore (61) forming a cone (65) which, acting in conjunction with the force transmitting element (63) guided in the second bore (61), produces a sliding force component along the second bore (61).

9. A holder according to Claim 8, characterised by the fact that a ball (63) supported on one side by the cone (65) of the clamping bolt (57) and by the movable clamping jaw (11) on the other is envisaged as the force transmitting element.

10. A holder according to Claim 8, characterised by the fact that a pin supported at one end at the cone (65) of the clamping bolt (57) and at the movable clamping jaw (11) at the other is envisaged as the force transmitting element.

11. A holder according to one of the Claims 1 to 10, characterised by the fact that the rotatable actuating element of the clamping device is provided with a hexagonal socket (48, 68) or a torx for its rotary operation.

12. A holder according to one of the Claims 2 to 11, characterised by the fact that the front end area (3) of the cutter holder containing the holding pocket (5) is narrower, to suit a narrower parting-off insert, than the other area (23) of the cutter holder which is not tapered, that the slot (29) which allows the movable clamping jaw (11) to swivel extends from the tapering area (3) up to the area (23) of the cutter carrier which is not tapered and that the first and the second bores (39, 59 or 41, 61) are envisaged in the area (23) of the cutter carrier which is not tapered.

13. A holder according to one of the Claims 8 to 12, characterised by the fact that the first bore (59) terminates at a shoulder face (25) of the cutter holder, which forms the transition between the tapered front end area (3) and the back area (23) of the cutter holder which is not tapered.

## Revendications

1. Support pour pièces d'outil à enlèvement de copeaux, en particulier des pièces pour piquer ou couper, équipé d'un porte-lames (1, 23) approximativement en forme de poutre, d'un évidement formé côté extrémité, qui sert de poche de rangement (5) pour les pièces et est limité par des mâchoires de serrage (9, 11) qui définissent le diamètre intérieur de la poche de rangement (5), d'une fente (29) qui s'étend du bord latéral du porte-lames (1, 23) jusqu'à proximité de la fermeture intérieure (7) de la poche de rangement (5) pour permettre une mobilité de basculement élastique de l'une (11) des mâchoires de serrage et d'un système de serrage, qui présente un organe d'actionnement (37, 57) logé de façon pivotante dans un alésage (39, 59) dans le porte-lames pour générer une force de serrage agissant dans la zone de la fente (29) sur la mâchoire de serrage (11) mobile et basculante, caractérisé en ce que l'alésage (39, 59) recevant l'organe d'actionnement (37, 57) est disposé à distance de la fente (29) et en ce qu'un organe de transmission de force (43, 63) transmettant la force de serrage de l'organe d'actionnement (37, 57) à la mâchoire de serrage (11) mobile est guidé de façon coulissante dans le porte-lames (1).

2. Support selon la revendication 1, caractérisé en ce que l'organe de transmission de force dans le porte-lames (1, 23) est guidé dans un deuxième alésage (41, 61) dont l'axe forme un angle par rapport à l'axe du premier alésage (39, 59) et le coupe à distance de la fente (29).

3. Support selon la revendication 2, caractérisé en ce qu'il est prévu un excentrique (45) comme organe d'actionnement du système de serrage et en ce que, comme organe de transmission de force, il est prévu une goupille qui s'appuie d'une part sur le rayon de l'excentrique (45) et d'autre part sur la mâchoire de serrage (11) mobile.

4. Support selon la revendication 2, caractérisé en ce que, comme organe d'actionnement du système de serrage, il est prévu une came (45') pivotante avec une surface de came à faible pente, en particulier sous la forme d'une vis sans fin qui s'étend avec une pente linéaire sur une plage angulaire d'environ 320° et en ce que, comme organe de transmission de force, il est prévu une goupille (43) qui s'appuie d'une part sur la came (45') et d'autre part sur la mâchoire de serrage (11) mobile.

5. Support selon la revendication 3 ou 4, caractérisé en ce que le deuxième alésage (41, 61) part d'un bord latéral du porte-lames (1, 23) en forme de poutre, s'étend perpendiculairement à l'axe longitudinal de la poutre jusqu'à la fente (29) et est interrompu à distance de cette fente par le premier alésage, lequel est conçu comme un alésage transversal (39) continu perpendiculaire à l'axe, lequel forme le logement de pivotement de l'excentrique (45) ou de la came (45').

6. support selon la revendication 5, caractérisé en ce l'excentrique ou la came est formé par une rainure annulaire (45, 45') qui est incorporée sous forme de cavité dans la périphérie d'un tourillon (37) cylindrique circulaire logé de façon pivotante dans l'alésage transversal (39), et en ce qu'au moins l'une des parties de cloison (49) du tourillon (37), qui délimitent la rainure annulaire (45, 45') sur le côté présente dans la zone de la plus grande profondeur de la rainure annulaire (45, 45') un orifice (51) qui permet le passage de la goupille de transmission de force (43) lors de l'engagement du tourillon (37) dans l'alésage transversal (39).

7. Support selon la revendication 6, caractérisé par un autre alésage (53) formé dans le porte-lames (1, 23) parallèlement au deuxième alésage (41) pour la goupille de transmission de force (43), qui est tangent à l'alésage transversal (39) pour le tourillon (37) dans la zone de sa rainure annulaire (45, 45') et est prévu pour recevoir une goupille de sécurité (55) qui s'engage dans la cavité formée par la rainure annulaire (45, 45') à la périphérie du tourillon (37).

8. Support selon la revendication 2, caractérisé en ce que le premier alésage (59) présente un filetage intérieur pour une vis de blocage (57) servant d'organe d'actionnement du système de serrage, laquelle forme sur sa zone d'extrémité dépassant dans le deuxième alésage (61) un cône (65), qui génère conjointement avec l'organe de transmission de force (63) guidé dans le deuxième alésage (61) une composante de force qui déplace cet organe le long du deuxième alésage (61).

9. Support selon la revendication 8, caractérisé en ce que comme organe de transmission de force, il est prévu une boule (63) qui s'appuie d'une part sur le cône (65) de la vis de serrage (57) et d'autre part sur la mâchoire de serrage (11) mobile.

10. Support selon la revendication 8, caractérisé en ce que, comme organe de transmission de force, il est prévu une goupille qui s'appuie d'une part sur le cône (65) de la vis de serrage (57) et d'autre part sur la mâchoire de serrage (11) mobile.

11. Support selon l'une quelconque des revendications 1 à 10, caractérisé en ce que l'organe d'actionnement pivotant du système de serrage est pourvu d'un six pans creux (48, 68) ou d'un torx pour sa commande de rotation.

12. Support selon l'une quelconque des revendications 2 à 11, caractérisé en ce que la zone d'extrémité (3) avant du porte-lames, qui contient la poche de rangement (5), présente du fait de l'adaptation à une pièce pour piquer étroite et à loger une largeur plus faible que la zone (23) restante, arrière, non rétrécie, du porte-lames, en ce que la fente (29) permettant la mobilité de basculement élastique de la mâchoire de serrage (11) mobile s'étend depuis la zone rétrécie (3) jusque dans la zone (23) non rétrécie du porte-lames, et en ce que les premier et second alésages (39, 59 et 41, 61) sont prévus dans la zone non rétrécie (23) du porte-lames.

13. Support selon l'une quelconque des revendications 8 à 12, caractérisé en ce que le premier alésage (59) débouche près d'une surface d'épaulement (25) du porte-lames, qui forme la transition entre la zone d'extrémité (3) avant rétrécie et la zone (23) arrière non rétrécie du porte-lames.
